# EUROPEAN PATENT APPLICATION

(11) **EP 3 815 808 A1**
(43) Date of publication of application: **05.05.2021**
(21) Application number: 20193860.2
(22) Date of filing: 01.09.2020
(51) Int. Cl.: B21D 43/10, B21D 5/02, B25J 15/00

(54) **GRIPPER FOR MANIPULATION IN A BENDING DEVICE BY A 6-AXIS ROBOT OF WORKPIECES TO BE BENDED**

(30) Priority: 31.10.2019 BE 201905752
(71) Applicant: L.V.D. Company N.V., 8560 Gullegem (BE)
(72) Inventor: SERRUYS, Wim, 8560 Gullegem (BE)
(74) Representative: Hostens, Veerle

(57) **Abstract**

The invention concerns a gripper (6) for manipulation in a bending device by a 6-axis robot of a workpiece (7) to be bended, comprising:
- a fixing part (18) for the robot to engage with; and
- a gripper part (19) which is provided with a gripper face (P) for therewith gripping the workpiece (7) and which is attached to the fixing part (18) so as to be rotatable around a rotational axis (S7) over a maximum rotational angle (α) of at least 90°, wherein said rotational axis (S7) is arranged at an axial angle (β) of between 110° and 135° relative to the sixth axis (S6) of the robot, and wherein the gripper part (19) comprises a main gripper part (23) which is fixed to the fixing part (18) so as to be rotatable around the rotational axis (S7) and has a first sub-gripper part (21) that comprises a first gripper face part of the gripper face (P) and is rotatable around a second rotational axis (S8) relative to the main gripper part (23).

## Description

The present invention concerns a gripper for manipulation in a bending device by a 6-axis robot of workpieces to be bended, comprising:
- at least one gripper face for therewith gripping a workpiece to be bended; and
- a fixing part for the 6-axis robot to engage with for fixing the gripper to the robot.

To bend workpieces to be bended automatically in a bending device, typically 6-axis robots are used which are typically provided with a gripper for presenting the workpiece to be bended to the bending press, and removing said workpiece therefrom again after bending. During bending of plate-like parts, the gripper must place the workpiece to be bended onto the die without the gripper or robot colliding with the bending press or bending tool.
Such a gripper is positioned with respect to a bending press in a bending device by rotation of the 6 axes of such a 6-axis robot. The sixth axis of these six axes here is used for rotation of the wrist as the smallest and most vulnerable part of this robot, i.e. the part with which the gripper is firmly held. This wrist is extremely sensitive. There is a high risk of breakage of this wrist in the robot.

During bending of workpieces, the risk is particularly high when a bend must be made on two opposing sides of a workpiece. The workpiece here must be presented in a first position relative to the bending press for making a first bend on a first side of the workpiece, then turned and presented back to the bending press for making a second bend on a second side of the workpiece arranged opposite the first side.

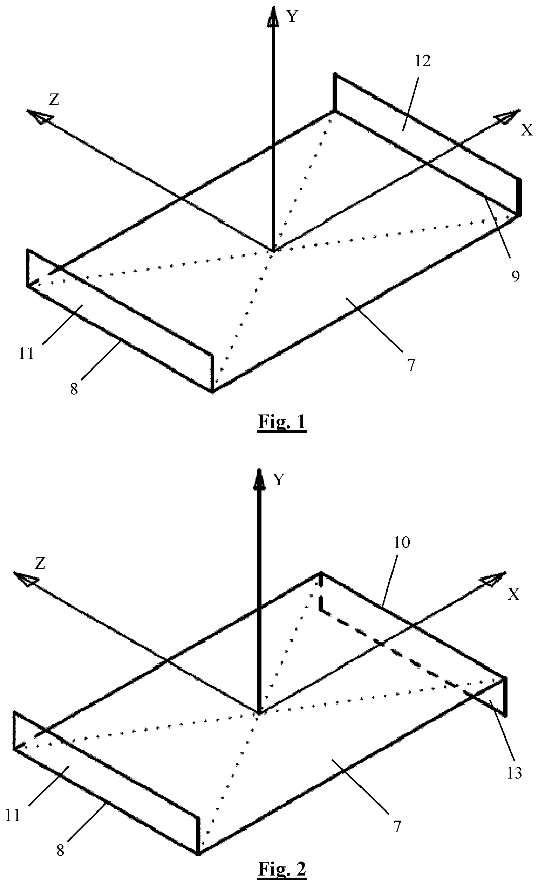

Here it is possible that the first bend (8) and the second bend (9) are normal bends, wherein a flange (11, 12) is formed which protrudes relative to the rest of the workpiece (7), as shown in figure 1. It is however also possible that the first bend (8) is a bend which forms an upright flange (11), while the second bend (10) is a so-called counter-bend (10) which forms a flange (13) that is oriented downward relative to the rest of the workpiece (7), as shown in figure 2.

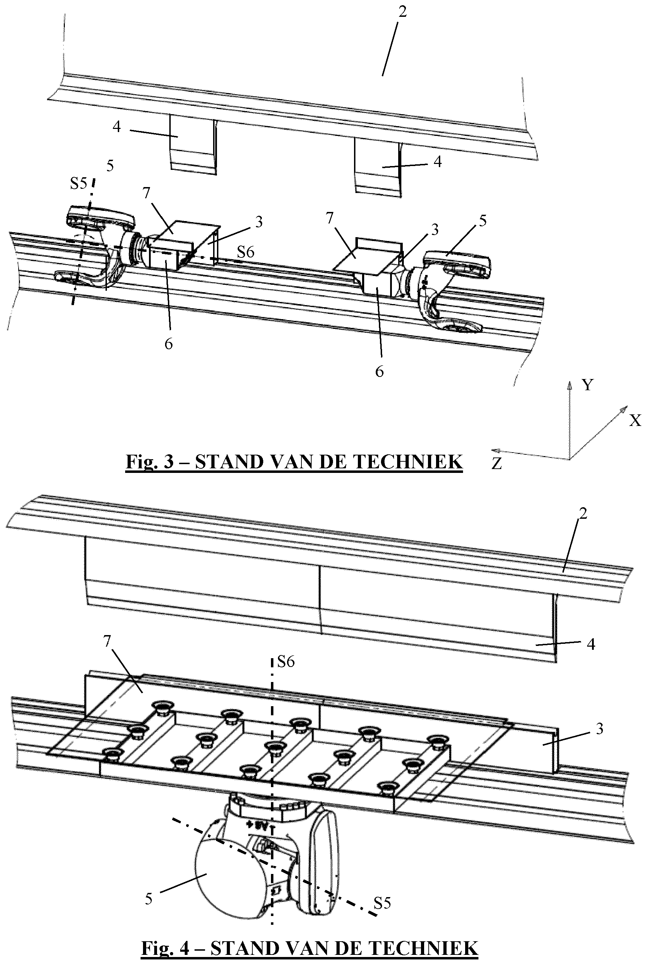

Figure 3 shows an axis system (X, Y, Z) with respect to a bending press (2). A workpiece (7) must be presented to the bending press (2) in the X direction and be turned around the Y axis or Z axis in order to make bends on opposite sides of said workpiece (7). If a bend (8) has already been made and a counter-bend (10) is necessary on the other side, a Z rotation may be performed by rotating the workpiece (7) around the 6th axis (S6) of the robot. If however a normal upright bend (9) is required, the various axes (S1 to S6) of the robot must be moved in order to position the robot wrist (5) as desired with respect to the bending press (2) (left position in figure 3).

Bystronic, with the Xpert 40, has marketed a bending cell in which the workpiece is released during bending and the robot repositions the gripper during bending in order then to grip the workpiece again along another side. With respect to precision however, it is preferred for the workpiece to remain guided by the gripper during bending.

Trumpf, with the TruBend Cell 7000, has developed a special bending press in which the robot arm of a small 6-axis robot with a small wrist can move between the bending tools.
Amada too, with the EG6013AR, has developed a similar special bending press in which the robot arm of such a small 6-axis robot with a small wrist can move between the bending tools.

The working principle of these special bending presses with small 6-axis robot is depicted in figure 3. In these special bending presses, the gripper (6) grips the workpiece (7) underneath in order to turn said workpiece (7) through 180°.
In order to turn a workpiece (7) through 180° relative to the Y axis without colliding with the bending press (2), the wrist (5) must be retracted sufficiently far along the X axis. To achieve this, almost all axes of the robot must be turned (from left to right position in figure 3).
With this gripper (6), a workpiece (7) can be turned through 180° around the Z axis by rotating it through 180° around the sixth axis (S6) of the robot, in order to form a bend (8) and a counter-bend (10) respectively on two opposing sides of a workpiece (7). For this, the wrist (5) must firstly be retracted sufficiently far along the X axis to prevent the wrist (5) from colliding with the bending press (2).
Such special bending presses are very costly. Since the distance between bending tools (3, 4) arranged next to each other must be sufficiently large to leave room for the wrist (5) of the robot together with the gripper (6), the robot must be configured so as to be horizontally movable, which entails associated costs.

Whereas figure 3 shows the prior art for small workpieces (7), figure 4 shows the most commonly used method for large workpieces (7). With sufficiently large workpieces (7), the gripper (6) may stand directly perpendicular to the 6th axis (S6) in order to present a workpiece (7) to the bending press (2) without the robot wrist (5) colliding with the bending press (2). The workpiece (7) may here be turned around the Y axis to make bends (8, 9) on two opposing sides of the workpiece (7), by rotation around the sixth axis (S6). The inertia of the workpiece (7) relative to said sixth axis (6) is very high. To limit the load on acceleration of this inertia, and to avoid breakage of the robot wrist (5), the workpiece (7) must be turned particularly slowly. Thus it takes a great deal of time to make the desired bends (8, 9) in a workpiece (7) in this fashion.

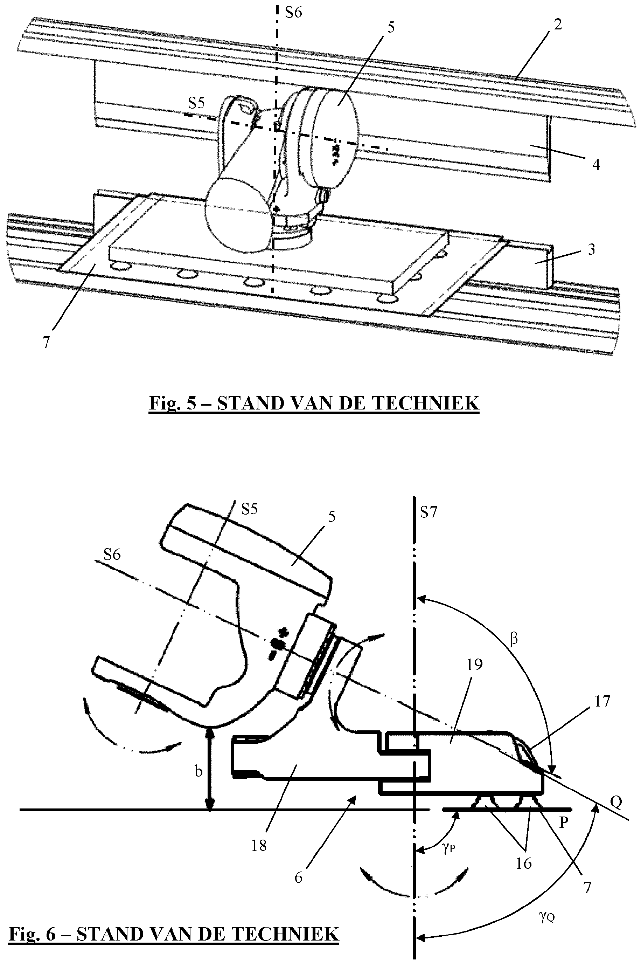

If a counter-bend (10) must be made, the situation shown in figure 5 results with this arrangement. During bending, the robot wrist (5) will collide with the bending press (2). To avoid this, using a conventional gripper (6), the robot must first position the workpiece (7) on a re-gripping station and then re-grip the workpiece (7) in an orientation which is rotated through 180°. This is very awkward and entails significant time loss.

In order to limit the inertia of the sixth axis during bending of large workpieces, when two bends must be made on opposing sides of a workpiece, JP 7-1042 proposes providing a gripper with an extra 7th rotational axis which is arranged perpendicularly to the sixth axis and perpendicularly to the gripper face with which the workpiece is gripped. Using this gripper, large rectangular panels can be bended on 2, 3 or 4 sides without re-gripping. The secondary rotation of 180° around the axis S7 allows the robot wrist to remain approximately at the same place when making bends on two opposing sides of a workpiece. In order to make a bend and a counter-bend respectively on two opposing sides, with this gripper however rotation is still required around the sixth axis of the robot, which carries a large inertia loading. This solution is thus primarily suitable for workpieces without counter-bend.

JP 6-328140 proposes, for making a bend and a counter-bend in such large workpieces, providing a gripper with an extra 7th rotational axis arranged perpendicularly to the sixth axis and parallel to the gripping face with which the workpiece is gripped. In this way, the inertia load of the sixth axis is limited. To make two bends on two opposing sides, with such a gripper again rotation around the sixth axis of the robot is required, again with a high inertia load. This solution is therefore primarily suited for workpieces with counter-bend.

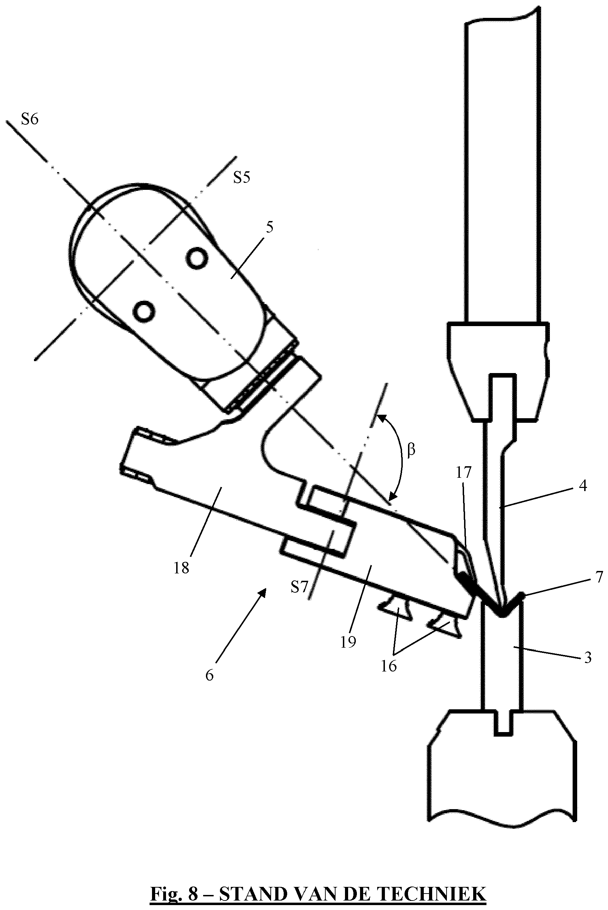

To provide a gripper for manipulation in a bending device by a 6-axis robot of workpieces to be bended, with which a secondary linear axis can be avoided and with which bends may be made on opposing sides of a workpiece, or also a bend and a counter-bend respectively may be made on said opposing sides, in each case with more limited inertia loading of the sixth axis than with the most common solution for making such bends without re-gripping of the workpiece, the present applicant has developed a new gripper which is illustrated in https://www.youtube/com/ watch?v=wtkeZ4BtTD9 and in figures 6-11.

This gripper (6) is a gripper (6) for manipulation in a bending device by a 6-axis robot of workpieces (7) to be bended, comprising:
- gripper faces (P, Q) for therewith gripping a workpiece (7) to be bended;
- a fixing part (18) for the 6-axis robot to engage with for fixing the gripper (6) to the robot; and
- a gripper part (19) which is provided with said gripper faces (P, Q) and is attached to the fixing part so as to be rotatable around a rotational axis (S7) over a maximum rotational angle (α) of at least 90°, wherein said rotational axis (S7) is arranged in the gripper (6) such that when the 6-axis robot engages with the gripper (6), said rotational axis (S7) is arranged at an axial angle (β) of between 110° and 135° relative to the sixth axis (S6) of said 6-axis robot.
With such an axial angle of 115°, the inertia of the gripper (6) and the workpiece (7) relative to the sixth axis (S6) is limited both for making bends on two opposing sides of a workpiece (7) and for making a bend and a counter-bend respectively on two opposing sides of a workpiece (7). This arrangement of the gripper (6) is therefore more advantageous than the arrangements proposed in JP 7-1042 and JP 6-328140.

A secondary advantage of this axial angle (β) is that on rotation of the workpiece (7) around the sixth axis (S6) of the 6-axis robot, the position of the workpiece (7) changes little in absolute coordinates, whereby the other axes of the 6-axis robot need move less.

Because the axial angle (β) is 115°, on rotation around the sixth axis (S6) of the robot, there is also a greater distance between the gripper (6) and workpiece (7) on one side and the wrist (5) and arm (axis 4) of the robot on the other. Part of the gripper (6) and workpiece (7) may thus be moved closer to the fifth axis (S5) of the robot, whereby the inertia around the fifth axis (S5) is also limited.

If the gripper part (19) is rotatable over a rotational angle of at least 90° around the rotational axis (S7), with this gripper (6) a workpiece (7) may be presented to the bending press (2) on three sides successively without re-gripping, for bending said workpiece (7) on these sides, without great movements of the wrist (5).

Said gripper (6) may be used in combination with light 6-axis robots or with heavy 6-axis robots, which allows not only smaller workpieces (7) (from for example 20 mm x 100 mm) but also larger workpieces (up to for example 1800 mm x 400 mm) to be bended with one and the same bending press (2).

The object of this invention is to provide a gripper which can be used for manipulating several types of workpieces to be bended.

This object of the invention is achieved by providing a gripper for manipulation in a bending device by a 6-axis robot of workpieces to be bended, comprising:
- a gripper face for therewith gripping a workpiece to be bended;
- a fixing part for the 6-axis robot to engage with for fixing the gripper to the robot; and
- a gripper part which is provided with the gripper face and is attached to the fixing part so as to be rotatable around a rotational axis over a maximum rotational angle of at least 90°, wherein said rotational axis is arranged in the gripper such that when the 6-axis robot engages with the gripper, said rotational axis is arranged at an axial angle of between 110° and 135° relative to the sixth axis of said 6-axis robot, and wherein the gripper part comprises:
   ∘ a main gripper part which is fixed to the fixing part so as to be rotatable around the rotational axis, for fixing the gripper part to the fixing part, and
   ∘ a first sub-gripper part which comprises a first gripper face part of said gripper face and is rotatable around a second rotational axis relative to the main gripper part.

An axial angle of between 110° and 135° offers the same advantages as the above-mentioned axial angle of 115°.

By means of such a sub-gripper part, it can be ensured that the same gripper can be used for manipulating several types of workpieces to be bended. Shorter and longer workpieces can in this way be manipulated with the same gripper.

The second rotational axis is here preferably arranged perpendicularly to the gripper face of the gripper part.

In a specific embodiment, the gripper part also has a second sub-gripper part which comprises a second gripper face part of the gripper face and is rotatable around a third rotational axis relative to the main gripper part.
Such a second sub-gripper part allows even greater flexibility with respect to the types of workpieces to be bended.
The third rotational axis is preferably arranged perpendicularly to the gripper face of the gripper part.

As well as the first sub-gripper part and the second sub-gripper part, a gripper according to this invention may comprise further sub-gripper parts.
By means of further sub-gripper parts, it may furthermore be ensured that the same gripper can be used for manipulating several types of workpieces to be bended.

Preferably, the gripper face stands at an angle relative to the rotational axis which is less than or equal to 90°.
In a specific embodiment, the gripper comprises a secondary gripper face for therewith gripping a workpiece to be bended.
Said secondary gripper face preferably also stands at an angle relative to the rotational axis which is less than or equal to 90°. Preferably, said angle is greater than or equal to 60°. If said secondary gripper face stands at an angle of around 60° relative to the rotational axis, the gripper can safely perform an arcuate movement of 45° (necessary for a bending angle of 90°) without the robot wrist colliding with the bending press.

Said maximum rotational angle of at least 90° means that, with respect to the sixth axis of the robot and viewed in projection onto a plane perpendicular to the rotational axis, the sum of the possible positive angular rotation and possible negative angular rotation is at least 90°.
Thus for example a maximum positive angular rotation of at least 30° relative to this projection may be provided, and a maximum negative angular rotation of 60° relative to said projection.
Preferably, the gripper part is rotatable between a first outermost position and a second outermost position, and when the 6-axis robot engages with the gripper, the sixth axis of the robot, viewed in projection onto a plane perpendicular to the rotational axis, is arranged in the middle between the first outermost position and the second outermost position. The maximum positive angular rotation and the maximum negative angular rotation are then selected so as to be equal to each other. Such asymmetrical movability simplifies the control of such a gripper and is best suited for avoiding collision on both a positive angular rotation and a negative angular rotation.
Furthermore, preferably the gripper part is arranged in the gripper such that when the 6-axis robot engages with the gripper, the gripper part is rotatable over a maximum angle of at least 45° relative to the sixth axis of the robot, viewed in projection onto a plane perpendicular to the rotational axis. This means that the gripper can perform both a positive angular rotation of at least 45° and a negative angular rotation of at least 45°.

Furthermore preferably, the gripper is provided with gripping means for gripping a workpiece to be bended against the gripper face. These gripping means may for example comprise a clamp and/or suction cups and/or magnets etc.

In addition, preferably the gripper is provided with control means for driving the rotational movement of the gripper part around the rotational axis.
These control means are preferably provided for said control means to be controlled by means of the 6-axis robot.

In a specific embodiment, the control means may comprise a pneumatic cylinder. By means of a pneumatic cylinder, the rotational movement of the gripper part around the rotational axis can be achieved in an economic fashion.
Such a pneumatic cylinder is preferably couplable to a pneumatic connection of the 6-axis robot.
Instead of such a pneumatic cylinder, for example an electric motor may also be used to drive the rotational movement.

The maximum rotational angle of the gripper part around the rotational axis is preferably between 90° and 130°. By limiting the maximum rotational angle to 130°, this can be achieved with simple means.
The larger the maximum rotational angle, the shorter the rotational centre distance may be between the sixth axis of the robot and the hinge axis of the gripper. The robot here need cover less distance.

The gripper according to this invention is preferably also provided with control means for driving the rotational movement of the one or more sub-gripper parts around their respective rotational axes. These control means are preferably provided for controlling these control means by means of the 6-axis robot. More specifically, pneumatic cylinders for example may be provided as such control means. Such pneumatic cylinders may then be provided so as to be couplable to a pneumatic connection of the 6-axis robot.
Instead of such pneumatic cylinders, for example one or more hydraulic actuators or electric motors may be used for driving the rotational movements of said sub-gripper parts.

The object of this invention is furthermore also achieved by providing an assembly of a 6-axis robot and a gripper according to this invention for manipulating workpieces to be bended in a bending device.

In addition, the object of this invention is achieved by providing a bending device comprising a bending press, a 6-axis robot and a gripper according to this invention and as described above for manipulating workpieces to be bended.

The present invention is now explained in more detail with reference to the following detailed description of an embodiment of a gripper and a bending device according to this invention. The aim of this description is exclusively to provide explanatory examples and indicate further advantages and features of this invention, and it may not therefore be interpreted as a restriction of the area of application of the invention or of the patent rights claimed in the claims.

In this detailed description, by means of reference signs, reference is made to the following drawings in which:
- figure 1 shows in perspective a workpiece in which a bend is made on two opposing sides in order to form a flange protruding relative to the rest of the workpiece;
- figure 2 shows in perspective a workpiece in which a bend is made on a first side in order to form a flange protruding relative to the rest of the workpiece, and a counter-bend is made on a second side opposite the first side in order to form a flange that is directed downward relative to the rest of the workpiece;
- figure 3 shows in perspective a part of a bending device according to the most common prior art for bending a small workpiece on two sides without re-gripping, with the gripper in two different positions relative to the bending press;
- figure 4 shows in perspective a part of the bending device according to the most common prior art for bending a large workpiece;
- figure 5 shows in perspective the gripper and the robot wrist from the bending device in figure 4, wherein the workpiece is placed in a position for making a counter-bend;
- figure 6 shows in a side view a gripper according to the more recent prior art, gripped by a robot wrist of a 6-axis robot, wherein the figure indicates how a first gripper face for therewith gripping a workpiece by means of suction cups of the gripper is positioned with respect to the robot wrist;
- figure 7 shows the gripper and robot wrist from figure 6, viewed in a projection onto a plane perpendicular to the rotational axis, with the gripper in its first outermost position and in its second outermost position, wherein the maximum rotational angle is indicated;
- figure 8 shows in a side view the gripper and robot wrist from figure 6 during manipulation of a workpiece on bending thereof in a bending press, wherein the workpiece is gripped against a second gripper face of the gripper by a mechanical clamp of the gripper;
- figure 9 shows in a top view the gripper and robot wrist from figure 6 during positioning of a workpiece which is gripped against the first gripper face of the gripper for making a first bend on a first side of said workpiece;
- figure 10 shows in a top view the gripper, robot wrist and workpiece from figure 6 during positioning of the workpiece, turned through 90° relative to figure 9, for making a second bend on a second side of said workpiece;
- figure 11 shows in a top view the gripper, robot wrist and workpiece from figure 6 during positioning of the workpiece, turned through 90° relative to figure 10 and through 180° relative to figure 9, for making a third bend on a third side of said workpiece;
- figure 12 shows in perspective a gripper according to this invention, gripped by a robot wrist of a 6-axis robot, with a first sub-gripper part and a second sub-gripper part of said gripper in their first outermost position for gripping a short workpiece;
- figure 13 shows in a top view the gripper and robot wrist from figure 12 during positioning of a short workpiece, for making a first bend on a first side of said workpiece;
- figure 14 shows in a top view the gripper, robot wrist and workpiece from figure 12 during positioning of the workpiece, turned through 90° relative to figure 13, for making a second bend on a second side of said workpiece;
- figure 15 shows in a top view the gripper, robot wrist and workpiece from figure 12 during positioning of the workpiece, turned through 90° relative to figure 14 and through 180° relative to figure 13, for making a third bend on a third side of said workpiece;
- figure 16 shows in perspective the gripper, robot wrist and workpiece from figure 12, with the first sub-gripper part and second sub-gripper part of this gripper in their second outermost position for gripping a long workpiece;
- figure 17 shows in a top view the gripper, robot wrist and workpiece from figure 16 during positioning of a long workpiece, for making a first bend on a first side of said workpiece;
- figure 18 shows in a top view the gripper, robot wrist and workpiece from figure 16 during positioning of the workpiece, turned through 90° relative to figure 17, for making a second bend on a second side of said workpiece;
- figure 19 shows in a top view the gripper, robot wrist and workpiece from figure 16 during positioning of the workpiece, turned through 180° relative to figure 17 and through 90° relative to figure 18, for making a third bend on a third side of said workpiece.

The bending devices shown comprise a bending press (2), a 6-axis robot and a gripper (6) for manipulating and bending workpieces (7). In the figures, the bending press (2) and the 6-axis robot are only shown partially. A person skilled in the art is familiar with possible embodiments and variants for such a bending press (2) and 6-axis robot for a bending device.
The novelty of the present invention lies in the gripper (6) and its arrangement relative to the other parts of the bending device. These aspects are clearly illustrated in the figures.

The depicted grippers (6) according to this invention each comprise a fixing part (18). The wrist (5) of the 6-axis robot may engage with a first end of said fixing part (18) in order to attach the gripper (6) to the robot. In the embodiment shown, the robot wrist (5) here grips the fixing part (18) in the extension of this end. In an alternative embodiment, the robot wrist (18) may for example engage with said end from above or below. The robot may adapt the orientation of its robot wrist (5) in order to place the gripper (6) in various desired positions.

At the other end of the fixing part (18), a gripper part (19) of the gripper (6) is attached so as to be rotatable around a rotational axis (S7). The fixing part (18) and the gripper part (19) are fixed together by means of the rotational axis (S7).

The gripper part (19) is provided with both suction cups (16) and clamping means (17) for being able to grip a workpiece (7) depending on requirements. During engagement of the workpiece (7), these gripping means (16, 17) - as in the prior art - each grip on the workpiece (7) along a respective gripper face (P, Q).
The suction cups (16) here define a first gripper face (P) which is arranged at an angle (γ_{P}) of 90° relative to the rotational axis (S7), similarly to the prior art as shown in figure 6.
The mechanical clamping means (17) define a second gripper face (Q) which, as in the prior art, is arranged at an angle (γ_{Q}) of 60° relative to the rotational axis (S7), as shown in figure 6.

The depicted grippers (6) are furthermore, as in the prior art, provided with a pneumatic cylinder (20) for controlling the rotational movement of the gripper part (19). This pneumatic cylinder (20) is coupled to a pneumatic connection of the 6-axis robot so that it can be controlled by means of the robot.

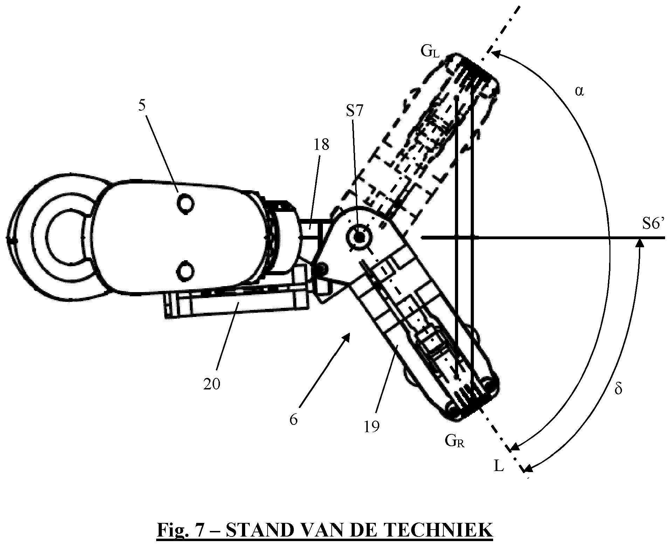

Figure 7 depicts the gripper (6) according to the more recent prior art, viewed in a projection onto a plane perpendicular to the rotational axis (S7), in solid lines in a first outermost position (G_{L}) and in dotted lines in a second outermost position (G_{R}). The gripper (6) according to the invention has a similar function principle for several types of workpieces (7).
As depicted, the gripper part (19) can be rotated by means of the pneumatic cylinder (20) over a maximum rotational axis (α) of 110° relative to the rotational axis (S7), as shown in figure 7. In alternative embodiments, this maximum rotational angle (α) may be greater or smaller. This maximum rotational angle (α) is always at least 90°. Furthermore, as shown in this figure 7, the projection of the 6th axis (S6') of the robot is arranged in the middle between the first outermost position (G_{L}) and the second outermost position (G_{R}). The gripper part (19) is then rotatable around the rotational axis (α) through a maximum angle (δ) of 55° relative to the projection of the 6th axis (S6') of the 6-axis robot.

In the various depicted embodiments, the rotational axis (S7) is arranged in the gripper (6) such that when the 6-axis robot engages with the gripper (6), said rotational axis (S7) is arranged at axial angle (β) of 115° relative to the sixth axis (S6) of the 6-axis robot, as shown in figures 6, 8, 12 and 16. In alternative embodiments, said angle (β) may be slightly larger or slightly smaller, as long as the angle remains between 110° and 135°.

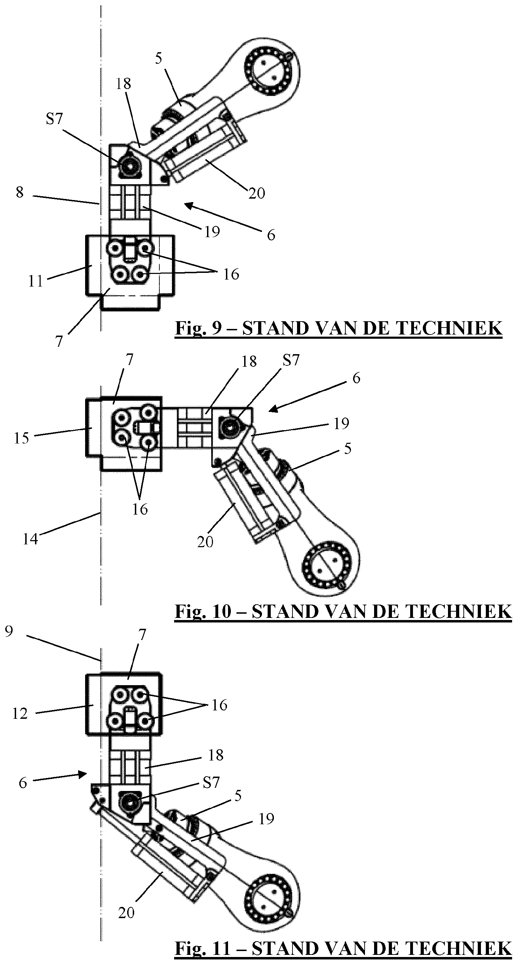

Because of said arrangement of the gripper part (19) in a gripper (6), the robot wrist (5) - with a suitable positioning of the gripper (6) relative to the bending tools (3, 4) - always remains at a safe distance from the bending press (2) for presenting a workpiece (7) between said bending tools (3, 4), as shown in figures 9 to 11. With the gripper (6) according to the closest prior art, the robot wrist (5) must always be presented between the bending tools (3, 4) inside the bending press (2), as shown in figure 3.
With the gripper (6) according to the more recent prior art and according to the invention, a secondary movability is thus added which ensures that the gripper (6) can present the workpiece (7) to the bending tools (3, 4) in different directions without the robot wrist (5) having to come too close to the bending press (2). Only a gripper part (19) of the gripper (6) must move into the bending press (2). Said gripper part (19) of the gripper (6) however requires much less space in the bending press (2) and between bending tools (3, 4) arranged next to each other. The bending press (2) need then not be specially adapted to allow the robot wrist (5) to move in between.

With judicious control of the robot and the rotational movement of the gripper part (19), it is possible to position a workpiece (7) at different orientations on the die (3) without releasing the workpiece (7) and without the robot colliding with the bending press (2).

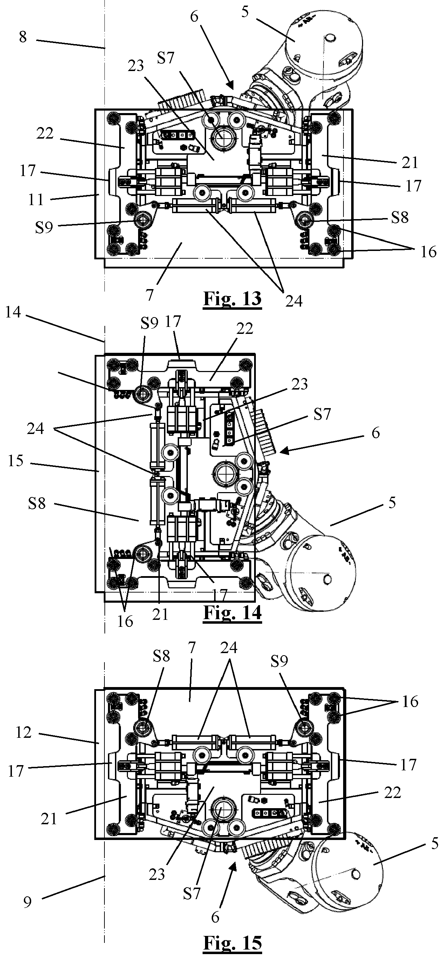

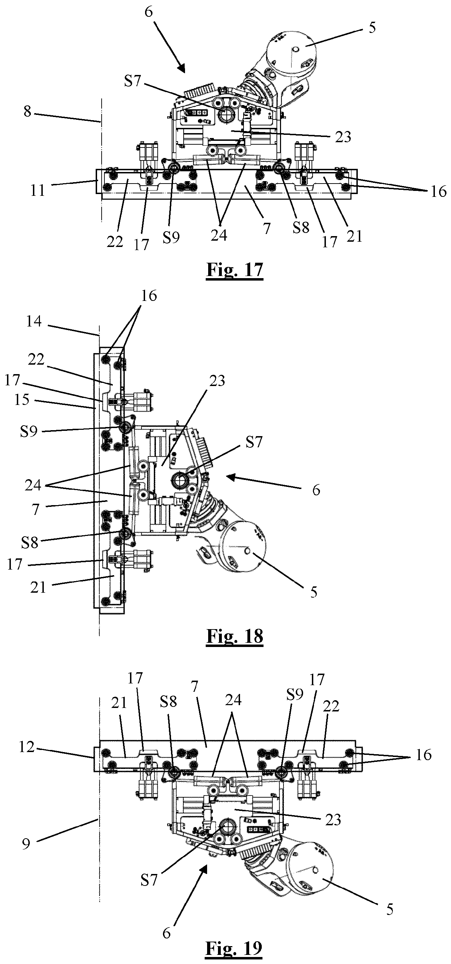

Figures 9 to 11, 13 to 15, and 17 to 19 show, for three different workpieces (7), how said workpiece (7) can be presented to the bending tool (3, 4) of a bending press (2) along three different sides by means of a gripper (6) according to this invention, wherein the gripper (6) does not release the workpiece (7).
In the position shown in figures 9, 13 and 17, the workpiece (7) is presented to the bending tool (3, 4) along a first side and a first bend (8) is made in the workpiece (7) so as to form a first upright flange (11), wherein the gripper (6) accompanies this bending movement.
After making this first bend (8), the robot moves the robot wrist (5) such that the workpiece is rotated through 90° and can again be presented to the bending tool (3, 4), as shown in figures 10, 14 and 18. This takes place without releasing the workpiece (7). In the embodiment shown, this is carried out without moving the gripper part (19) of the gripper (6) relative to the fixing part (18).
A second bend (14) is made along a second side of the workpiece (7) in order to form a second upright flange (15). Then the gripper part (19) of the gripper (6) is rotated through 110° and the robot moves the robot wrist (5) in order to rotate the workpiece (7) again through 90° and present it to the bending tool (3, 4), as shown in figures 11, 15 and 19. A third bend (9) is made along a third side of the workpiece (7) in order to form a third upright flange (12).

It is clear from figures 9 to 11, 13 to 15, and 17 to 19 that, in contrast to the bending device in figure 3, the robot wrist (5) need cover a smaller distance between performance of the different bends (8, 9, 14), whereby it is no longer necessary to move the robot on a secondary linear axis.

In the depicted embodiment of a gripper (6) according to this invention, the gripper part (19) has:
- a main gripper part (23) which is fixed to the fixing part (18) so as to be rotatable around the rotational axis (S7), for fixing the gripper part (19) to said fixing part (18);
- a first sub-gripper part (21) which comprises a first gripper face part of the first gripper face (P) and is rotatable around a second rotational axis (S8) relative to the main gripper part (23); and
- a second sub-gripper part (22) which comprises a second gripper face part of the first gripper face (P) and is rotatable around a third rotational axis (S9) relative to the main gripper part (23).
In the embodiment shown, the second rotational axis (S8) and the third rotational axis (S9) are arranged perpendicularly on the gripper face of the gripper part (19).
In the embodiment shown, the mechanical clamping means (17) which define secondary gripper faces (Q) are provided on the sub-gripper parts (21, 22).

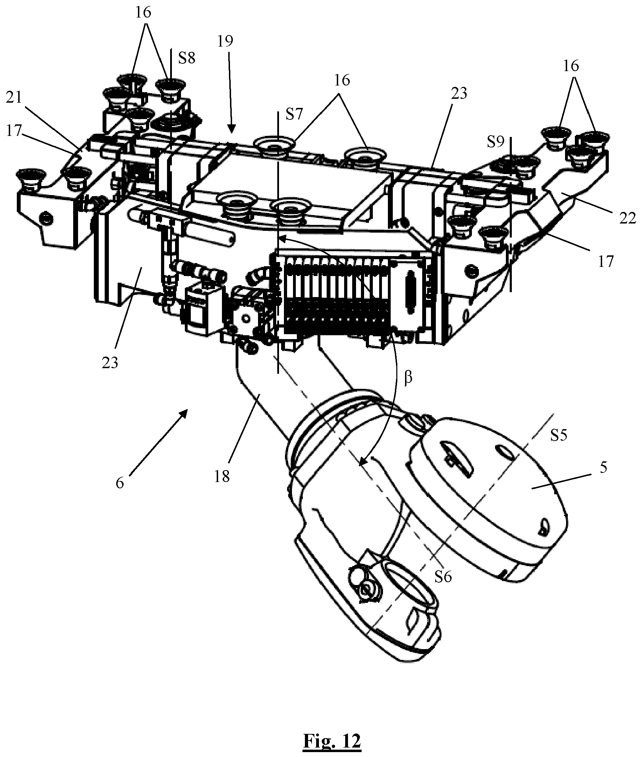

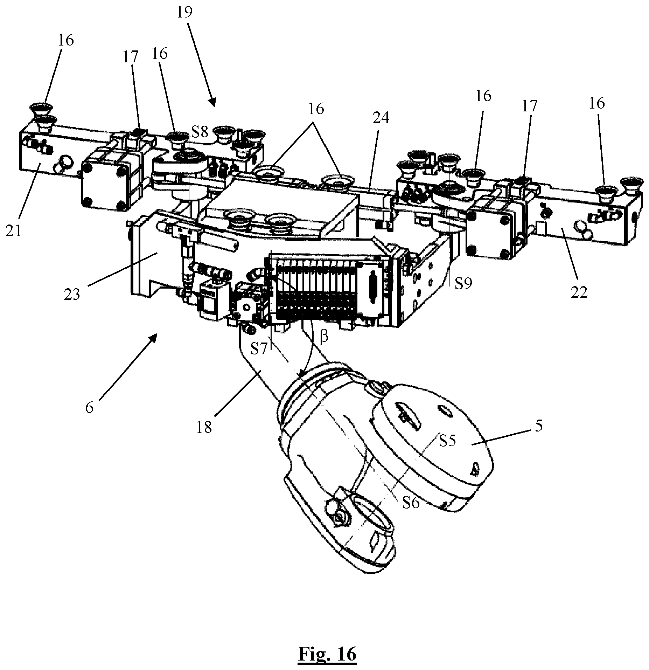

Alternatively or additionally, mechanical clamping means (17) may also be provided on the main gripper part (23).
Both the main gripper part (23) and the sub-gripper parts (21, 22) are provided with suction cups (16). Not all suction cups (16) need always be activated. By careful activation of the suction cups (16), different types of workpieces (7) can be judiciously gripped. For this, at least three suction cups (16) must be active and should be spaced as far apart as possible so as to be able to absorb a force couple. Said force couple may work in all directions and results from inertia forces on acceleration/braking of the robot. By moving the sub-gripper parts (21, 22), the spread of the suction cups (16) may be suitably adapted to the workpieces (7) to be gripped, so that several alternative forms of workpieces (7) can be gripped. Here in each case it may be ensured that no collision with the bending press (2) occurs. In a first outermost position of the sub-gripper parts (21, 22), the gripper (6) is thus suitable for gripping short workpieces (7), as shown in figures 12-15. In a second outermost position of the sub-gripper parts (21, 22), the gripper (6) is suitable for gripping long workpieces (7), as shown in figures 16-19. If the gripper (6) in this second outermost position were to engage with short workpieces (7), the gripper part (19) would however collide with the bending press (2).
In order to move the sub-gripper parts (21, 22) between their outermost positions, the gripper (6) is provided with respective pneumatic cylinders (24) for controlling the rotational movement of each sub-gripper part (21, 22). These pneumatic cylinders (24) are coupled to a pneumatic connection of the 6-axis robot so that they can be controlled by means of the robot. It may be provided to drive these sub-gripper parts (21, 22) in synchrony. These pneumatic cylinders (24) may also be provided so as to be driveable individually, in order to move the sub-gripper parts (21, 22) separately to a desired position relative to the main gripper part (23) so that a plurality of workpieces (7) can be gripped in the most ideal fashion for each workpiece (7).

In a first alternative embodiment of a gripper (6) according to the invention, the second sub-gripper part (22) may be omitted and the gripper (6) may be provided with fixedly arranged gripping means (16, 17) at the level of the second sub-gripper part (22).
In a second alternative embodiment of a gripper (6) according to the invention, the first sub-gripper part (21) may be omitted and the gripper (6) may be provided with fixedly arranged gripping means (16, 17) at the level of the first sub-gripper part (21).

In further alternative embodiments of a gripper (6) according to the invention, yet further sub-gripper parts may be provided which are rotatable around further axes perpendicular to the gripper face of the gripper part (19). The aim and favourable effect is that the form of the gripper (6) can in each case be adapted to the available gripping surface of the workpiece (7).

## Claims

1. Gripper (6) for manipulation in a bending device by a 6-axis robot of workpieces (7) to be bended, comprising:
- a gripper face (P) for therewith gripping a workpiece (7) to be bended; and
- a fixing part (18) for the 6-axis robot to engage with for fixing the gripper (6) to the robot;
- a gripper part (19) which is provided with the gripper face (P) and is attached to the fixing part (18) so as to be rotatable around a rotational axis (S7) over a maximum rotational angle (α) of at least 90°, wherein said rotational axis (S7) is arranged in the gripper (6) such that when the 6-axis robot engages with the gripper (6), said rotational axis (S7) is arranged at an axial angle (β) of between 110° and 135° relative to the sixth axis (S6) of said 6-axis robot;
**characterized in that** the gripper part (19) comprises a main gripper part (23) which is fixed to the fixing part (18) so as to be rotatable around the rotational axis (S7), for fixing the gripper part (19) to the fixing part (18),
that the gripper part (19) has a first sub-gripper part (21) which comprises a first gripper face part of the gripper face (P) and is rotatable around a second rotational axis (S8) relative to the main gripper part (23).

2. Gripper (6) according to claim 1, **characterized in that** the second rotational axis (S8) is arranged perpendicularly to the gripper face (P) of the gripper part (19).

3. Gripper (6) according to one of the preceding claims, **characterized in that** the gripper part (19) has a second sub-gripper part (22) which comprises a second gripper face part of the gripper face (P) and is rotatable around a third rotational axis (S9) relative to the main gripper part (23).

4. Gripper (6) according to claim 3, **characterized in that** the third rotational axis (S9) is arranged perpendicularly to the gripper face (P) of the gripper part (19).

5. Gripper (6) according to any of the preceding claims, **characterized in that** the gripper face (P) stands at an angle (γ_{P}) relative to the rotational axis (S7) which is less than or equal to 90°.

6. Gripper (6) according to any of the preceding claims, **characterized in that** the gripper comprises a secondary gripper face (Q) for therewith gripping a workpiece (7) to be bended.

7. Gripper (6) according to claim 6, **characterized in that** the secondary gripper face (Q) stands at an angle (γ_{Q}) relative to the rotational axis (S7) which is less than or equal to 90° and which preferably is approximately equal to 60°.

8. Gripper (6) according to any of the preceding claims, **characterized in that** the gripper part (19) is rotatable between a first outermost position (G_{L}) and a second outermost position (G_{R}), and when the 6-axis robot engages with the gripper (6), the sixth axis (S6) of the robot, viewed in projection onto a plane perpendicular to the rotational axis (S7), is arranged in the middle between the first outermost position (G_{L}) and the second outermost position (G_{R}).

9. Gripper (6) according to any of the preceding claims, **characterized in that** the gripper part (19) is arranged in the gripper (6) such that when the 6-axis robot engages with the gripper (6), the gripper part (19) is rotatable over a maximum angle (δ) of at least 45° relative to the sixth axis (S6) of the robot, viewed in projection onto a plane perpendicular to the rotational axis (S7).

10. Gripper (6) according to any of the preceding claims, **characterized in that** the gripper (6) is provided with control means (20) for driving the rotational movement of the gripper part (19) around the rotational axis (S7).

11. Gripper (6) according to any of the preceding claims, **characterized in that** the control means (20) are provided for said control means (20) to be controlled by means of the 6-axis robot.

12. Gripper (6) according to claim 10 or 11, **characterized in that** the control means (20) comprises a pneumatic cylinder (20).

13. Gripper (6) according to any of the preceding claims, **characterized in that** the maximum rotational angle (α) of the gripper part (19) around the rotational axis (S7) is between 90° and 130°.

14. Assembly of a 6-axis robot and a gripper (6) for manipulating workpieces (7) to be bended in a bending device, **characterized in that** the gripper (6) is a gripper (6) according to any of the preceding claims.

15. Bending device comprising a bending press (2), a 6-axis robot and a gripper (6) for manipulating workpieces (7) to be bended, **characterized in that** the gripper (6) is a gripper (6) according to any of claims 1 to 13.
